# FASCICULE DE BREVET EUROPEEN

(11) **EP 2 955 403 B1**
(45) Date de publication et mention de la délivrance du brevet: **14.12.2016**
(21) Numéro de dépôt: 15171489.6
(22) Date de dépôt: 10.06.2015
(51) Int. Cl.: F16C 33/60, F16C 33/64, F16C 19/36, F16C 43/06, F16C 35/073, F16C 19/50

(54) **ROULEMENT A DEUX RANGEES CONCENTRIQUES DE CORPS ROULANTS**
WÄLZLAGER MIT ZWEI KONZENTRISCHEN WÄLZKORPERREIHEN
ROLLING BEARING WITH TWO ROWS OF CONCENTRIC ROLLING ELEMENTS

(30) Priorité: 11.06.2014 FR 1455290
(43) Date de publication de la demande: 16.12.2015
(73) Titulaire: NTN-SNR Roulements, 74000 Annecy (FR)
(72) Inventeur: Pallanchard, Vincent, 74150 RUMILLY (FR); Leclercq, Jean-Christophe, 74150 RUMILLY (FR)
(74) Mandataire: Derambure Conseil

(56) Documents cités:
- EP-A1- 0 794 342
- WO-A1-2010/041549
- WO-A1-2012/157021
- CN-U- 202 220 796
- DE-A1-102008 011 060
- FR-A1- 2 699 977
- US-A1- 2014 003 756
- US-A1- 2014 033 840

## Description

L'invention concerne, de façon générale, le domaine technique des unités de roulement et, en particulier, celui des unités de roulement dotées de deux ou plusieurs rangées de corps roulants.

Plus précisément, l'invention concerne le domaine du remplissage des corps roulants d'unités de roulement, encore appelées ci-après roulements, comprenant plusieurs rangées de corps roulants.

Il est connu de l'art antérieur différentes solutions visant à remplir une rangée de corps roulants par l'intermédiaire d'une découpe prévue sur une bague.

Notamment, la publication DE 10 2008 011 060 A1 se rapporte à un roulement comportant une bague intérieure et une bague extérieure. La bague intérieure comprend une découpe. Cette découpe permet le remplissage de corps roulants dans un espace annulaire situé entre les bagues intérieure et extérieure. Un organe de recouvrement est adapté pour venir en recouvrement de ladite découpe.

Une telle réalisation permet le remplissage d'une rangée de corps roulants dans un roulement comprenant une bague intérieure et une bague extérieure.

Le roulement selon l'invention comporte une première bague, formant une bague intérieure et une deuxième bague. Les première et deuxième bagues comportent chacune un axe central. Les axes centraux des première et deuxième bagues sont parallèles entre eux. Lesdites première et deuxième bagues sont espacées radialement par un premier espace annulaire. La deuxième bague comprend une première partie de bague et une deuxième partie de bague. Le roulement comporte en outre une troisième bague. La troisième bague comporte un axe central. Les axes centraux des troisième et deuxième bagues sont parallèles entre eux. Les deuxième et troisième bagues sont espacées radialement par un deuxième espace annulaire. Enfin, le roulement comporte une première rangée de corps roulants agencée dans le premier espace annulaire et couplant en rotation ladite première bague et ladite deuxième bague, et une deuxième rangée de corps roulants agencée dans le deuxième espace annulaire et couplant en rotation ladite deuxième bague et ladite troisième bague.

La publication WO 2012 157 021 A1 se rapporte à un roulement tel que précédemment décrit, dans lequel la deuxième partie de bague est une découpe. En l'espèce la découpe prévue sur la deuxième bague est débouchante dans le deuxième espace annulaire et permet le remplissage des corps roulants de la deuxième rangée de corps roulant. Le roulement décrit dans la publication WO 2012 157 021 A1 comporte en outre sur une première bague en deux parties avec une deuxième découpe débouchante dans le premier espace annulaire qui permet le remplissage des corps roulants de la deuxième rangée de corps roulant. Toutefois, cette solution est techniquement compliquée et coûteuse à mettre en place.

Il existe par conséquent le besoin de simplifier le remplissage des corps roulants des première et deuxième rangées tout en garantissant un roulement avec des tolérances de fabrication précises, qui soit facile à réalisé sans augmentation démesurée des coûts de fabrication tout en respectant les conditions d'équilibrage de tels roulements.

A cette fin, dans le roulement selon l'invention, par ailleurs conforme à la définition donnée ci-dessus, les première et deuxième parties de bague sont mobiles l'une par rapport à l'autre entre une configuration de remplissage, dans laquelle le premier espace annulaire et le deuxième espace annulaire sont accessibles, les corps roulants des première et deuxième rangées de corps roulants pouvant alors être introduits et/ou ôtés des premier et deuxième espaces annulaires, et une configuration assemblée où les première et deuxième parties de la deuxième bague forment ensemble un deuxième et un troisième chemin de roulement continus, une partie de chacun des deuxième et troisième chemins de roulement étant prévue sur chacune des première et deuxième parties de la deuxième bague, lesdits premier et deuxième chemins de roulement coopérant avec chacun des corps roulants de la première rangée de corps roulants, et lesdits troisième et quatrième chemins de roulement coopérant avec chacun des corps roulants de la deuxième rangée de corps roulants.

Grâce à cette réalisation, le remplissage du roulement est facilité, sans impacter substantiellement la fabrication dudit roulement.

CN 202220796 U et EP 0 794 342 décrivent des exemples d'une telle mise en oeuvre.

Le roulement selon l'invention, par ailleurs conforme à la définition donnée ci-dessus, se caractérise par le fait que la première partie de bague comporte une découpe, et la deuxième partie de bague forme un organe de recouvrement de ladite découpe, ladite découpe débouchant dans le premier espace annulaire et dans le deuxième espace annulaire de sorte à permettre le remplissage des corps roulants de la première et deuxième rangée de corps roulants à travers ladite découpe.

Selon une réalisation, la première rangée de corps roulants est une rangée de rouleaux coopérant chacun avec les premier et deuxième chemins de roulement ménagés sur les première et deuxième bagues. Les roulements à rouleaux ont l'avantage de supporter des charges radiales importantes.

Selon une réalisation, la deuxième rangée de corps roulants est une rangée de rouleaux coopérant chacun avec les troisième et quatrième chemins de roulement ménagés sur les deuxième et troisième bagues. Ici encore cette réalisation a l'avantage de permettre au roulement ainsi conçu de supporter des charges radiales importantes.

Selon une réalisation, les rouleaux de la rangée de rouleaux sont cylindriques et chaque rouleau est orienté avec un angle non nul par rapport aux rouleaux qui lui sont directement adjacents. Les roulements ayant une telle configuration ont l'avantage de supporter des charges radiales et axiales et des moments de déversement importants. Cette configuration permet également une grande rigidité, ce qui permet une grande précision de rotation.

Selon une réalisation complémentaire, chaque rouleau est orienté à angle droit par rapport aux rouleaux qui lui sont directement adjacents. L'orientation à angles droit de rouleaux adjacents augmente particulièrement les résistances aux charges radiales et axiales du roulement.

Selon une réalisation, les corps roulants sont adjacents les uns par rapport aux autres. En d'autres termes, aucun séparateur n'est prévu entre les rouleaux, ce qui simplifie un tel assemblage et augmente sa compacité et ses performances.

Selon une réalisation, en configuration assemblée, un organe de positionnement coopère avec la première partie de la deuxième bague et la deuxième partie de la deuxième bague pour positionner la deuxième partie de la deuxième bague par rapport à la première partie de la deuxième bague.

Selon une réalisation, en configuration assemblée, un organe de fixation fixe la deuxième partie de la deuxième bague sur la première partie de la deuxième bague.

Selon une réalisation, la deuxième bague présente une épaisseur radiale dans une direction radiale, la découpe s'étend sur toute l'épaisseur radiale de la deuxième bague. Cette réalisation permet de réaliser un unique endroit pour le remplissage des corps roulants de la première rangée et de la deuxième rangée, diminuant ainsi les contraintes liées à la fabrication de tels assemblages, et augmentant la cadence d'assemblage de tels roulements.

Selon une réalisation complémentaire, la découpe s'étend sur un secteur angulaire de la deuxième bague inférieur à 90° autour de l'axe central de la deuxième bague, et de préférence inférieur à 45°, et dans lequel l'organe de recouvrement s'étend sur un secteur angulaire de la deuxième bague inférieur à 90°, et de préférence inférieur à 45°. La découpe est réalisée sur une portion angulaire réduite de la deuxième bague. Par exemple, la découpe peut avoir des dimensions qui correspondent aux dimensions des corps roulants à mettre en place dans les premier et deuxième espaces annulaires.

Selon une réalisation complémentaire, la découpe comporte un fond et deux parois latérales opposées reliées entre elles par ledit fond, et l'organe de recouvrement coopère par complémentarité de forme avec les parois latérales et le fond de la découpe. Ainsi, il est possible d'assurer une continuité des deuxième et/ou troisième chemins de roulement. La coopération par complémentarité de forme permet de résoudre d'éventuels problèmes d'équilibrage liés à la découpe sur la bague intermédiaire et assure une continuité de matière sur l'ensemble de la bague intermédiaire.

Selon une réalisation complémentaire, la découpe comporte un fond et deux parois latérales opposées reliées entre elles par ledit fond, et un organe de positionnement coopère avec l'organe de recouvrement et le fond de la découpe pour positionner l'organe de recouvrement par rapport au fond de la découpe. L'organe de positionnement assure la précision de la mise en place de l'organe de recouvrement.

Selon une réalisation complémentaire, la découpe comporte un fond et deux parois latérales opposées reliées entre elles par ledit fond et un organe de fixation, par exemple une vis, fixe l'organe de recouvrement au fond de la découpe. La fixation par vis assure un assemblage robuste et simple à mettre en oeuvre de l'organe de recouvrement.

Selon une réalisation complémentaire, l'organe de recouvrement a une forme trapézoïdale. La forme trapézoïdale permet de faciliter l'assemblage par un guidage des surfaces de l'organe de recouvrement dans la découpe.

Selon une réalisation complémentaire, l'organe de recouvrement comporte des surfaces externes convexes. En d'autres termes, l'organe de recouvrement a une forme arrondie, qui peut aussi être prismatique. Ces formes permettent de charger et/ou décharger les corps roulants afin de limiter les vibrations engendrées par le passage de corps roulants en face de l'organe de recouvrement.

Selon une réalisation, les première et deuxième bagues et/ou les deuxième et troisième bagues ne sont pas coaxiales. Il est ainsi possible de s'adapter à de nombreuses contraintes cinématiques.

Selon une réalisation, les première et deuxième bagues et/ou les deuxième et troisième bagues sont coaxiales.

Selon une réalisation, le premier espace annulaire et le deuxième espace annulaire définissent chacun un plan médian, et les plans médians des premier et deuxième espaces annulaires ne sont pas coplanaires. Ici encore, il est possible de s'adapter aux contraintes d'encombrement pouvant apparaitre suivant les assemblages à réaliser.

Selon une réalisation, le roulement comprend en outre :
- une quatrième bague, lesdites troisième et quatrième bagues étant espacées radialement par un troisième espace annulaire, la quatrième bague définissant un sixième chemin de roulement continu
- une troisième rangée de corps roulants agencée dans le troisième espace annulaire et couplant en rotation lesdites troisième et quatrième bagues, et
dans lequel
- la troisième bague comprend une première partie de bague et une deuxième partie de bague, et
- les première et deuxième parties de la troisième bague sont mobiles l'une par rapport à l'autre entre une configuration de remplissage, dans laquelle le deuxième espace annulaire et le troisième espace annulaire sont accessibles, les corps roulants des première et deuxième rangées de corps roulants pouvant alors être introduits et/ou ôtés des premier et deuxième espaces annulaires, et une configuration assemblée où les première et deuxième parties de la troisième bague forment ensemble le quatrième et un cinquième chemin de roulement continus, une partie de chacun des quatrième et cinquième chemins de roulement étant prévue sur chacune des première et deuxième parties de la troisième bague, lesdits cinquième et sixième chemins de roulement coopérant avec chacun des corps roulants de la troisième rangée de corps roulants Ainsi, le roulement peut comprendre une pluralité de rangées de corps roulants concentriques ou non. En d'autres termes, dans le cas présent, la première bague forme une bague intérieure, la quatrième bague forme une bague extérieure et les deuxième et troisième bagues forment des bagues intermédiaires, qui sont toutes les deux en deux parties.

Selon une réalisation, le roulement peut comprendre une bague intérieure, une bague extérieure et une pluralité de bagues intermédiaires, toutes ou certaines des bagues intermédiaires, par exemple une bague intermédiaire sur deux comprenant une première et une deuxième partie de bague mobiles l'une par rapport à l'autre entre une configuration de remplissage, dans laquelle deux espaces annulaires sont accessibles, les corps roulants des première et deuxième rangées de corps roulants pouvant alors être introduits et/ou ôtés des premier et deuxième espaces annulaires, et une configuration assemblée où les première et deuxième parties de bague forment ensemble deux chemins de roulement continus.

On décrit également un procédé de fabrication d'un roulement, non constitutif de l'invention, notamment d'un roulement tel que ci-dessus décrit comprenant les étapes :
- réaliser une première bague définissant un premier chemin de roulement continu,
- ébaucher une deuxième bague comprenant une première partie de bague et une deuxième partie de bague,
- réaliser une troisième bague définissant un quatrième chemin de roulement continu,
- assembler la première partie de bague et la deuxième partie de bague,
- maintenir en position la deuxième partie de bague sur la première partie de bague par un organe de positionnement,
- usiner un deuxième chemin de roulement continu sur la première partie de bague et la deuxième partie de bague de la deuxième bague, une partie du deuxième chemin de roulement étant prévue sur chacune des première et deuxième parties de la deuxième bague,
- usiner un troisième chemin de roulement continu sur la première partie de bague et la deuxième partie de bague de la deuxième bague, une partie du troisième chemin de roulement étant prévue sur chacune des première et deuxième parties de la deuxième bague,
- tremper la deuxième bague formée par les première et deuxième parties de la deuxième bague maintenues en position l'une par rapport à l'autre,
- rectifier le deuxième et le troisième chemin de roulement de la deuxième bague formée par les première et deuxième parties de la deuxième bague,
- désassembler la deuxième partie de bague de la première partie de bague, de sorte à placer la deuxième bague en configuration de remplissage, dans laquelle le premier espace annulaire et le deuxième espace annulaire sont accessibles, ,
- assembler la première bague et la première partie de la deuxième bague, lesdites première bague et première partie de bague étant espacées radialement par un premier espace annulaire, le premier espace annulaire étant en partie défini par le deuxième chemin de roulement,
- assembler la troisième bague et la première partie de la deuxième bague dépourvue de l'organe de recouvrement, lesdites première partie de la deuxième bague et troisième bagues étant espacées radialement par un deuxième espace annulaire, le deuxième espace annulaire étant en partie défini par le troisième chemin de roulement,
- remplir, à partir de la configuration de remplissage de la deuxième bague, dans laquelle le premier espace annulaire et le deuxième espace annulaire sont accessibles, les corps roulants des première et deuxième rangées de corps roulants pouvant alors être introduits et/ou ôtés des premier et deuxième espaces annulaires, le premier espace annulaire avec une première rangée de corps roulants pour coupler en rotation ladite première bague et ladite deuxième bague,
- remplir, à partir de la configuration de remplissage de la deuxième bague, le deuxième espace annulaire avec une deuxième rangée de corps roulants pour coupler en rotation ladite deuxième bague et ladite troisième bague,
- replacer la deuxième partie bague sur la première partie de bague,
- fixer la deuxième partie bague par un organe de fixation de sorte à ce que les première et deuxième parties de bague soit dans une configuration assemblée où les première et deuxième parties de la deuxième bague forment ensemble un deuxième et un troisième chemin de roulement continus. Un tel procédé permet de réaliser un roulement dans lequel il est facile de mettre en place des corps roulants, qui peut être à plusieurs rangées de billes, et facile à mettre en oeuvre.

D'autres caractéristiques et avantages de l'invention ressortiront clairement de la description qui en est faite ci-après, à titre indicatif et nullement limitatif, en référence aux dessins annexés, dans lesquels :

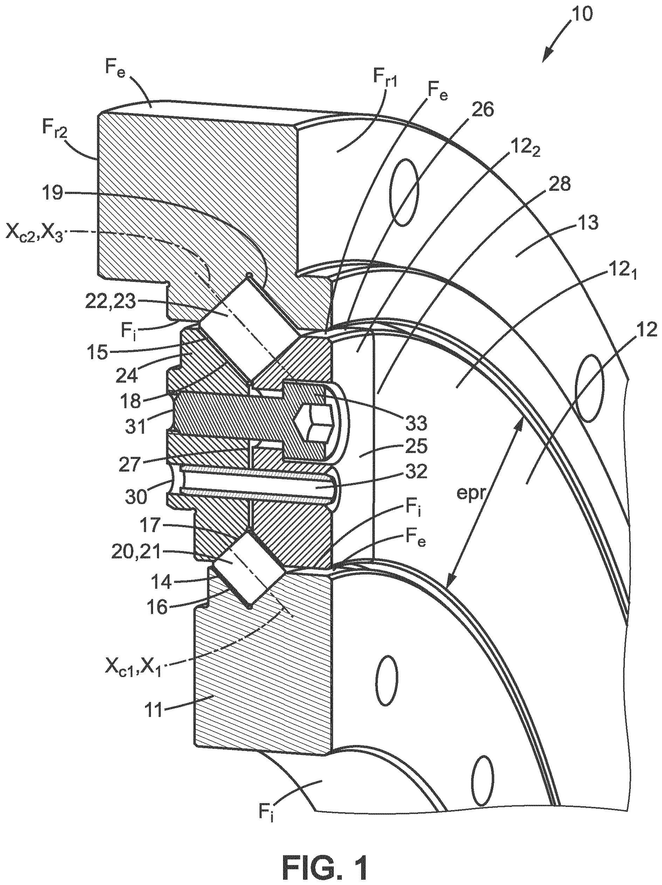

- La figure 1 est une vue en perspective en coupe d'un roulement selon un premier mode de réalisation de l'invention comportant une première bague formant une bague intérieure, une deuxième bague, formant une bague intermédiaire, une troisième bague formant une bague extérieure, et deux espaces annulaires dans chacun desquels est logé une rangée de corps roulants. La deuxième bague comporte une première et une deuxième partie de bague, la première partie de bague et la deuxième partie de bague étant dans une configuration assemblée, la première partie de bague comportant une découpe et la deuxième partie de bague formant un organe de recouvrement de la découpe ;
- La figure 2 représente le roulement de la figure 1 en coupe, avec l'organe de recouvrement logé dans la découpe ;

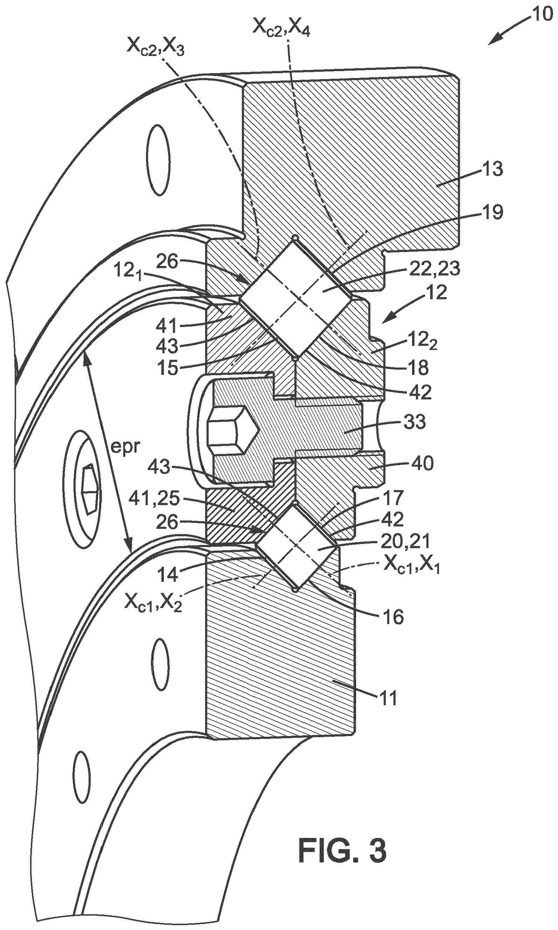

- La figure 3 est une vue en perspective en coupe d'un roulement selon un exemple comparatif de réalisation de l'invention comportant une première bague formant une bague intérieure, une deuxième bague formant une bague intermédiaire et comprenant une première et une deuxième partie de bague, la première et la deuxième partie de bague formant chacune une demi-bague. Le roulement comporte en outre une troisième bague formant une bague extérieure, et deux espaces annulaires dans chacun desquels est logée une rangée de corps roulants. La première et la deuxième partie de bague sont dans une configuration assemblée;
- La figure 4 représente le roulement de la figure 2 en coupe avec la deuxième bague composée des deux demi bagues ;
- Les figures 5a, 5b, 5c sont des vues en perspectives et en coupe de l'organe de recouvrement des figures 1 et 2 ;
- La figure 6 est une vue schématique de dessus d'un roulement, selon un deuxième mode de réalisation de l'invention, comportant une bague intérieure, une bague extérieure, deux bagues intermédiaires et trois espaces annulaires adaptés pour recevoir chacun une rangée de corps roulants, les bagues n'étant pas coaxiales les unes par rapport aux autres.

Un roulement 10 selon l'invention est destiné à faire partie d'un assemblage ayant un axe A-A et comprenant non seulement le roulement 10 mais également une pièce fonctionnelle adjacente. A titre d'exemple non limitatif, le roulement peut être monté sur un arbre d'entraînement.

Le terme « axial » se réfère conventionnellement à ce qui est sensiblement orienté dans la direction de l'axe A-A tandis que le terme « radial » se réfère conventionnellement à ce qui est sensiblement perpendiculaire à cet axe A-A.

Par ailleurs, les termes « interne » et « externe » ont des sens relatifs se rapportant à leur positionnement radial vis-à-vis de l'axe A-A ; la position « interne » désignant conventionnellement une position radiale plus proche de l'axe A-A que la position « externe ».

Les figures 1, 2, et 6 illustrent un roulement 10 selon divers modes de réalisation de l'invention.
Le roulement 10 comporte une première bague 11, une deuxième bague 12 et une troisième bague 13. Chacune des premières, deuxièmes et troisièmes bagues comporte un premier centre C₁, qui est constitué par le point situé à égale distance de l'ensemble des points d'une surface dite «interne» de la bague. Chacune des premières, deuxièmes et troisièmes bagues comporte également un deuxième centre C₂, qui est constitué par le point situé à égale distance de l'ensemble des points d'une surface dite «externe» de la bague.

Tel que représenté sur les figures 1, 2, 3 et 4, les première bague 11, deuxième bague 12 et troisième bague 13 sont des couronnes, et les premier et deuxième centres C₁, C₂ sont confondus et forme un centre C. Chaque bague est un solide de révolution. Chaque bague admet pour axe de symétrie un axe passant par son propre centre C. Cet axe de symétrie forme l'axe central de la bague. Les première, deuxième et troisième bagues sont coaxiales, leurs axes de symétrie, qui constituent leurs axes centraux, se confondant en l'occurrence avec l'axe A-A. Les première, deuxième et troisième bagues sont même concentriques (leurs centres C sont confondus).

Toutefois, dans une variante de réalisation, la première bague 11 et la deuxième bague 12 et/ou la première bague 11 et la troisième bague 13 et/ou la deuxième bague 12 et la troisième bague 13 peuvent être prévues non concentriques et/ou non coaxiales.

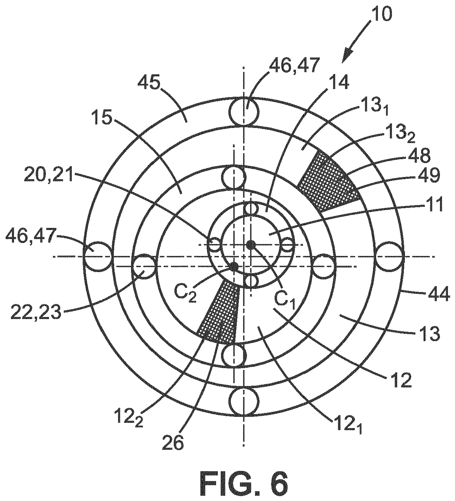

Par exemple, tel que représenté sur la figure 6, les première, deuxième et troisième bagues 11,12, 13 ne sont pas coaxiales les unes par rapport aux autres. Toutefois, elles comportent toutes au moins un axe central passant par leur premier et/ou deuxième centre C₁, C₂ et parallèle à l'axe A-A.

Tel que représenté sur les figures 1, 2, 3, 4 et 6, chacune des première, deuxième et troisième bague comporte au moins un axe central passant par son premier et/ou deuxième centre C₁, C₂ et parallèle à l'axe A-A.

Chacune des première, deuxième et troisième bagues 11, 12, 13 comporte un diamètre intérieur Di qui correspond à la longueur d'un segment de droite passant par le premier centre C₁ de la bague et limité par la surface dite « interne » de la bague. Chacune des première, deuxième et troisième bagues 11, 12, 13 comporte un diamètre extérieur De qui correspond à la longueur d'un segment de droite passant par le deuxième centre C₂ de la bague et limité par la surface dite « externe » de la bague.

Chacune des première, deuxième et troisième bagues 11, 12, 13 comporte en outre un diamètre moyen Dm qui est la moyenne entre les diamètres intérieur Di et extérieur De. Le diamètre moyen Dm de la première bague 11 est inférieur au diamètre moyen Dm de la deuxième bague 12. Le diamètre moyen Dm de la deuxième bague 12 est lui aussi inférieur au diamètre moyen Dm de la troisième bague 13.

La première bague 11 est radialement espacée de la deuxième bague 12 par un premier espace annulaire 14. De façon similaire, la deuxième bague 12 est radialement espacée de la troisième bague 13 par un deuxième espace annulaire 15. Les première et deuxième bague 11, 12 sont mobiles l'une par rapport à l'autre autour d'un axe de rotation. De façon similaire, les deuxième et troisième bagues 12, 13 sont mobiles l'une par rapport à l'autre autour d'un axe de rotation.

Dans les figures 1, 2, 3 et 4, ces axes de rotation se confondent avec les axes centraux des bagues et avec l'axe A-A. Dans le mode de réalisation représenté sur la figure 6, ces axes de rotation sont parallèles l'un par rapport à l'autre mais non confondus.

Ainsi, la troisième bague 13 et la deuxième bague 12 peuvent être mobile en rotation tandis que la première bague 11 reste fixe. Inversement, la troisième bague 13 peut rester fixe pendant que la première et la deuxième bague 11, 12 sont mobiles en rotation.

La première, la deuxième et la troisième bagues 11, 12, 13 ont une forme annulaire, et comportent chacune une face intérieure Fi qui définit son diamètre intérieur Di et une face extérieure Fe qui définit son diamètre extérieur De. Les première, deuxième et troisième bagues 11, 12, 13 comportent chacune une première et une deuxième face radiale Fr1, Fr2 s'étendant radialement. Les première et deuxième faces radiales Fr1, Fr2 relient les faces intérieure et extérieure Fi, Fe. Les premières faces radiales Fr1 des bagues peuvent être coplanaires ou non coplanaires. De façon similaire, les deuxièmes faces radiales Fr2 des bagues peuvent être coplanaires ou non coplanaires.

Par exemple, les premières faces radiales Fr1 des première, deuxième et/ou troisième bagues 11, 12, 13 ne sont pas coplanaires. Les première, deuxième et/ou troisième bagues 11, 12, 13 peuvent avoir alors par exemple des axes centraux confondus mais sont non-concentriques (en d'autres termes, leurs centres ne sont pas confondus, ils sont dans des plans différents).

La première bague 11 est une bague continue. La première bague 11 définit un premier chemin de roulement 16. Plus particulièrement, la première bague 11 comporte une première rainure, notamment en forme de V vue de sa section transversale et telle que visible sur les figures 1, 2, 3 et 4, localisée sur la face extérieure Fe. La première rainure forme le premier chemin de roulement 16. Le premier chemin de roulement 16 est continu.

Le diamètre intérieur de la deuxième bague 12 est supérieur au diamètre extérieur de la première bague 11. En outre, le diamètre extérieur de la deuxième bague 12 est inférieur au diamètre intérieur de la troisième bague 13.

La deuxième bague 12 définit un deuxième chemin de roulement 17. Plus particulièrement, la deuxième bague 12 comprend sur sa face intérieure Fi définissant son diamètre intérieur Di une deuxième rainure, notamment en forme de V vue de sa section transversale. La deuxième rainure, notamment en forme de V, forme le deuxième chemin de roulement 17. Le deuxième chemin de roulement 17 est continu.

En position montée du roulement 10, le premier chemin de roulement 16 est en regard du deuxième chemin de roulement 17. Les premier et deuxième chemins de roulement 16, 17 définissent les frontières du premier espace annulaire 14.

La deuxième bague 12 définit en outre un troisième chemin de roulement 18 continu. Plus particulièrement, la deuxième bague 12 comprend sur sa surface annulaire définissant le diamètre extérieur de la bague intermédiaire une troisième rainure, notamment en forme de V vue de sa section transversale. La troisième rainure forme le troisième chemin de roulement 18.

La deuxième bague 12 comporte une première et deuxième partie de bague 12₁, 12₂. Une partie de chacun des deuxième et troisième chemins de roulement 17, 18 est prévu sur chacune des première et deuxième parties de bague 12_{1,} 12₂ de la deuxième bague 12. Les première et deuxième parties de bague 12_{1,} 12₂ sont mobiles l'une par rapport à l'autre entre une configuration dite de remplissage et une configuration dite assemblée où les première et deuxième parties de la deuxième bague forment ensemble un solide continu. Par exemple, en configuration de remplissage, la première et la deuxième partie de bague 12_{1,} 12₂ sont à une distance non nulle l'une de l'autre.

Dans la configuration assemblée des première et deuxième parties de bague12_{1,}12₂, les première et deuxième parties de bague 12_{1,} 12₂ de la deuxième bague forment ensemble un deuxième et un troisième chemin de roulement 17, 18 continus.

La troisième bague 13 est une bague continue et pleine. La troisième bague 13 définit un quatrième chemin de roulement 19 continu. Plus particulièrement, la troisième bague 13 comprend sur sa surface annulaire définissant le diamètre intérieur de la troisième bague 13 une quatrième rainure, notamment en forme de V vue de sa section transversale. La quatrième rainure en forme de V forme le quatrième chemin de roulement 19.

Dans des variantes de réalisation, les rainures peuvent avoir d'autres formes vues de leurs sections transversales, elles peuvent par exemple avoir une forme d'ogives.

En position montée du roulement 10, le troisième chemin de roulement 18 est en regard du quatrième chemin de roulement 19. Les troisième et quatrième chemins de roulement 18, 19 forment les frontières du deuxième espace annulaire 15.

Le roulement 10 comporte une première rangée de corps roulants 20 agencée entre les première et deuxième bagues 11, 12. Plus précisément, la première rangée de corps roulants 20 est agencée dans le premier espace annulaire 14. La première rangée de corps roulants 20 couple en rotation les première et deuxième bagues 11, 12. Par exemple, les corps roulants 21 de la première rangée de corps roulants 20 sont tous identiques.

Le premier chemin de roulement 16 et le deuxième chemin de roulement 17 reçoivent les corps roulants 21 de la première rangée de corps roulants 20.

Le roulement 10 comporte en outre une deuxième rangée de corps roulants 22 agencée entre les deuxième et troisième bagues 12, 13. Plus précisément, la deuxième rangée de corps roulants 22 est agencée dans le deuxième espace annulaire 15. La deuxième rangée de corps roulants 22 couple en rotation les deuxième et troisième bagues 11,12, 13. Par exemple, les corps roulants 23 de la deuxième rangée sont tous identiques.

Le troisième et le quatrième chemin de roulement 18, 19 reçoivent les corps roulants 23 de la deuxième rangée de corps roulants 22.

Dans la configuration de remplissage des première et deuxième parties de bague 12_{1,} 12₂ de la deuxième bague 12, le premier espace annulaire 14 et le deuxième espace annulaire 15 sont accessibles, les corps roulants des première et deuxième rangées peuvent être introduits et/ou ôtés des premier et deuxième espaces annulaires. En d'autres termes, la configuration de remplissage permet le remplissage des corps roulants de la première et deuxième rangée de corps roulants 20, 22.

En configuration de remplissage, les espaces annulaires de part et d'autre de la deuxième bague peuvent être remplis.
Tel que représenté sur les figures 1, 2, 3 et 4, les corps roulants 21 de la première rangée de corps roulants 21 peuvent être des rouleaux. Les rouleaux peuvent être de forme cylindrique et s'étendent longitudinalement selon un axe de cylindre Xc1. Chaque rouleau de la première rangée de corps roulants 20 a par exemple une longueur inférieure à son diamètre.

Les corps roulants 23 de la deuxième rangée de corps roulants 22 peuvent également être des rouleaux. Les rouleaux peuvent être de forme cylindrique et s'étendent longitudinalement selon un axe de cylindre Xc2. Les rouleaux de la deuxième rangée de corps roulants 22 peuvent être de dimensions sensiblement égales ou inférieures aux rouleaux de la première rangée de corps roulants 20. Chaque rouleau de la deuxième rangée de corps roulants 22 a par exemple une longueur inférieure à son diamètre.

Chaque rouleau de la première et la deuxième rangées de corps roulants 20, 22 comporte une première face plane, une deuxième face plane, reliées l'une à l'autre par une enveloppe cylindrique.

Les rouleaux de la première rangée de corps roulants 20 sont agencés alternativement selon deux directions différentes. En d'autres termes, chaque rouleau de la première rangée de corps roulants 20 est orienté avec un angle non nul par rapport aux rouleaux qui lui sont directement adjacents. Ainsi, un rouleau de la première rangée de corps roulants 20 est agencé selon une première direction X1, et les rouleaux qui lui sont directement adjacents sont agencés selon une deuxième direction X2, les directions X1 et X2 formant un angle non nul entre elles. De préférence, les directions X1 et X2 sont orthogonales de sorte que les rouleaux soient orientés à angle droit les uns par rapport aux autres.

Les rouleaux de la première rangée de corps roulants 20 sont agencés dans le premier espace annulaire 14 de sorte qu'une portion de leur enveloppe cylindrique soit en contact, par exemple (quasi) linéaire, avec le premier et/ou le deuxième chemin de roulement 16, 17.

La première rangée de corps roulants 20 comporte par exemple un nombre pair de rouleaux afin de respecter l'alternance entre rouleaux.

Similairement, les rouleaux de la deuxième rangée de corps roulants 22 sont agencés alternativement selon deux directions différentes. En d'autres termes, chaque rouleau de la deuxième rangée de corps roulants 22 est orienté avec un angle non nul par rapport aux rouleaux qui lui sont directement adjacents. Ainsi, un rouleau de la deuxième rangée de corps roulants 22 est agencé selon une troisième direction X3, et les rouleaux qui lui sont directement adjacents sont agencés selon une quatrième direction X4, les directions X3 et X4 formant un angle non nul entre elles. De préférence, les directions X3 et X4 sont orthogonales de sorte que les rouleaux soient orientés à angle droit les uns par rapport aux autres.

Les rouleaux de la deuxième rangée de corps roulants 22 sont agencés dans le deuxième espace annulaire 15 de sorte qu'une portion de leur enveloppe cylindrique soit en contact, par exemple (quasi) linéaire, avec le troisième et/ou le quatrième chemin de roulement 18, 19.

La deuxième rangée de corps roulants 22 comporte par exemple également un nombre pair de rouleaux afin de respecter l'alternance entre rouleaux.

Par exemple le premier, deuxième, troisième et quatrième chemin de roulement 16, 17, 18, 19 définissent chacun un plan médian, et les plans médians des premier, deuxième, troisième et quatrième chemins de roulement 16, 17, 18, 19 ne sont pas coplanaires.

Les rouleaux respectivement des première et deuxième rangées de corps roulants 20, 22 sont adjacents les uns aux autres. En d'autres termes, aucun séparateur n'est prévu entre les rouleaux, et lesdits rouleaux sont en contact les uns par rapport aux autres.

Dans des variantes de réalisation, les corps roulants des première et deuxième rangées de corps roulants 20, 22 peuvent être tout corps connus de l'homme du métier, comme par exemple des billes, des aiguilles, des rouleaux coniques, ... et les chemins de roulement des bagues sont adaptés en conséquence. La forme des première, deuxième, troisième et quatrième rainures dépend des types de corps roulants utilisés. Les corps roulants de la première rangée peuvent être différents de ceux de la deuxième rangée avec, par exemple des billes sur la première rangée et des rouleaux sur la deuxième rangée, ou inversement.

Par exemple, tel que représenté sur les figures 1, 2, 3 et 4, le roulement 10 comporte une bague intérieure, qui est la première bague 11, une bague intermédiaire qui est la deuxième bague 12 et une bague extérieure qui est la troisième bague 13.

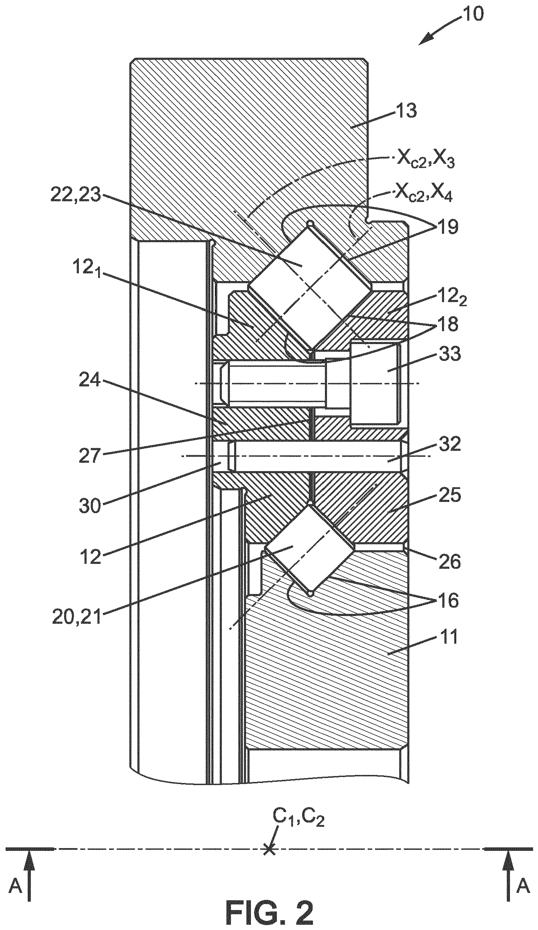

**Dans un premier mode de réalisation,** tel que représenté sur les figures 1 et 2, la première partie de bague 12₁ de la deuxième bague 12 comporte un corps 24 ayant une forme annulaire et la deuxième partie de bague 12₂ de la deuxième bague forme un organe de recouvrement 25 de la première partie de bague 12₁.

La forme annulaire du corps 24 de la première partie de bague 12₁ de la deuxième bague 12 est obtenue par révolution d'une section sensiblement rectangulaire autour d'un axe de rotation A. Le corps 24 de la première partie de bague 12₁ de la deuxième bague 12 présente une épaisseur radiale epr dans une direction radiale. Le corps 24 de la première partie de bague 12₁ de la deuxième bague 12 comporte une face extérieure et une face intérieure. La face intérieure est située à une première distance de son axe central, la face extérieure est située à une deuxième distance de son axe central, et la première distance est inférieure à la deuxième distance. Plus précisément la différence entre la deuxième distance et la première distance correspond à l'épaisseur radiale epr de la deuxième bague 12.

Le corps 24 de la première partie de bague 12₁ de la deuxième bague 12 comprend une découpe 26.

La découpe 26 est réalisée sur une portion angulaire ou une portion radiale du corps 24 de la première partie de bague 12₁ de la deuxième bague 12. La découpe 26, telle que représentée sur les figures 1 et 2, s'étend sur toute l'épaisseur radiale de la deuxième bague 12 qui correspond à l'épaisseur radiale de la première partie de bague 12₁.

La découpe 26 débouche dans le premier espace annulaire 14 et dans le deuxième espace annulaire 15 ci-dessus définis. La découpe 26 est adaptée pour qu'un rouleau (ou tout autre corps roulants) puisse être introduit dans le premier espace annulaire 14 et/ou le deuxième espace annulaire 15. En d'autres termes les dimensions de la découpe 26 sont dépendantes des dimensions du plus grand corps roulant inséré. Par exemple, si les corps roulants 21 de la première rangée de corps roulants 20 ont des dimensions plus importantes que les corps roulants 23 de la deuxième rangée de corps roulants 22, la découpe 26 correspondra aux dimensions des corps roulants de la première rangée, de sorte que les corps roulants de la première rangée puissent être insérés dans le deuxième espace annulaire 15.

En configuration de remplissage, la découpe 26 autorise l'insertion d'un seul corps roulant à la fois.

Par exemple, la découpe 26 a une forme sensiblement trapézoïdale. La découpe 26 comporte un fond 27, une première et une deuxième parois latérales 28reliées entre elles par le fond 27. En l'espèce les surfaces des première et deuxième parois latérales 28de la découpe 26 sont courbes. Toutefois, dans une variante de réalisation, les surfaces des première et deuxième parois latérales 28de la découpe 26 peuvent être planes. En outre, un rétrécissement de section peut être prévu vers le fond 27 de la découpe 26, de sorte que la découpe 26 soit sensiblement en forme d'ogive vers le fond 27.

L'organe de recouvrement 25 et la découpe 26 sont adaptés pour coopérer ensemble. Plus particulièrement, l'organe de recouvrement 25 est destiné à venir fermer la découpe 26, de sorte qu'en position montée de l'organe de recouvrement 25 dans la découpe 26, ou en d'autre terme dans une configuration assemblée de la première partie de bague 12₁ de la deuxième bague 12 et de la deuxième partie de bague 12₂ de la deuxième bague 12, la deuxième bague 12 comporte une surface extérieure continue. En particulier, les deuxième et troisième chemins de roulement 17, 18 de la deuxième bague 12 sont continus.

L'organe de recouvrement 25 est également appelé bouchon.

En l'espèce, l'organe de recouvrement 25 vient en regard de la découpe 26 et coopère par complémentarité de forme avec ladite découpe 26, de sorte à assurer une continuité de matière de la deuxième bague 12 lorsque l'organe de recouvrement 25 est en position dans la découpe 26.

Sur le fond 27 de la découpe 26 est prévu un orifice de positionnement 30 et un orifice de fixation 31. Par exemple, pour des soucis d'encombrement, les orifices de positionnement et de fixation 30, 31 sont situés l'un en dessous de l'autre.

L'orifice de positionnement 30 est adapté pour coopérer avec un organe de positionnement 32. Par exemple l'organe de positionnement 32 est une goupille. Toutefois, dans des variantes de réalisation, l'organe de positionnement 32 peut être constitué par tout organe connu de l'état de la technique et adapté pour le positionnement de corps 24. Par exemple, l'organe de positionnement 32 peut être une saillie d'indexation, ou encore un pion de positionnement.

L'organe de positionnement 32 coopère avec l'organe de recouvrement 25 et l'orifice de positionnement 30 de la découpe 26 pour assurer un positionnement précis de l'organe de recouvrement 25 par rapport à la découpe 26.

L'orifice de fixation 31 coopère avec un organe de fixation 33. L'orifice de fixation 31 est par exemple taraudé pour coopérer avec un organe de fixation 33 tel qu'une vis, et plus particulièrement pour coopérer avec la tige filetée d'une vis de fixation prévue pour fixer l'organe de recouvrement 25 dans la découpe 26.

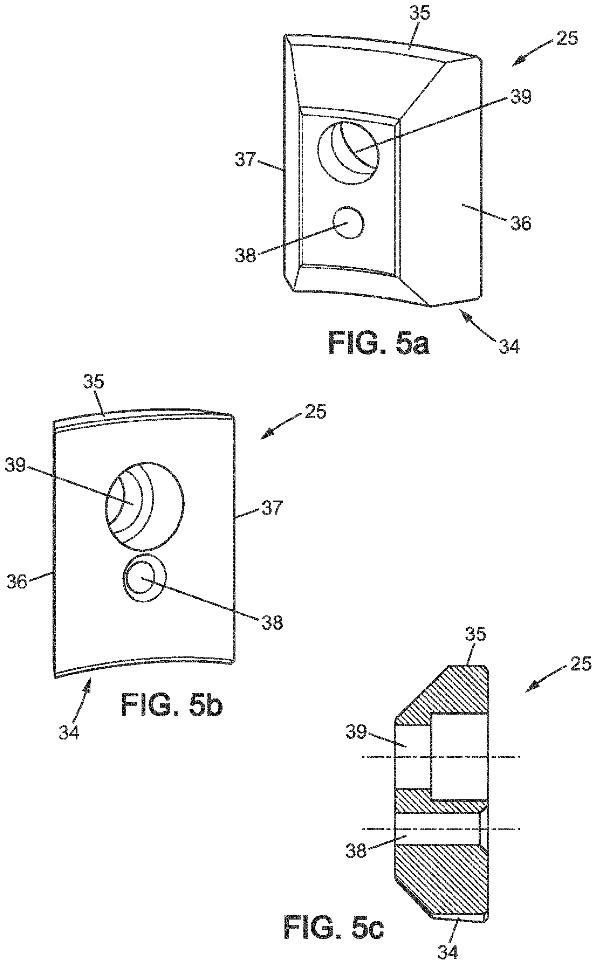

L'organe de recouvrement 25, tel que représenté sur les figures 5a à 5c, comporte une première face longitudinale 34 correspondant au diamètre intérieur de la deuxième bague 12, et une deuxième face longitudinale 35 correspondant au diamètre extérieur de la deuxième bague 12. L'organe de recouvrement 25 comporte également une première face latérale 36 destinée à venir en contact avec la deuxième paroi latérale 28 de la découpe 26 et une deuxième face latérale 37 destinée à venir en contact avec la première paroi latérale 28 de la découpe 26.

L'organe de recouvrement 25 a par exemple une forme trapézoïdale complémentaire de la découpe 26 et comporte un rétrécissement de section au niveau de sa portion destinée à coopérer avec le fond 27 de la découpe 26. L'organe de recouvrement 25 comporte en outre également un orifice de positionnement 38 destiné à recevoir l'organe de positionnement 32 et un orifice de fixation 39 destiné à recevoir l'organe de fixation 33. L'organe de recouvrement 25 a une forme arrondie ou prismatique permettant de charger et/ou décharger les corps roulants progressivement, ceci afin de limiter les vibrations engendrées par le passage des corps roulants face au bouchon.
La réalisation du roulement 10 est simple et facile à mettre en oeuvre.

Dans un premier temps, on réalise la première et la troisième bague 11, 13.

On ébauche ensuite la deuxième bague 12 en réalisant le corps 24 de la deuxième bague 12 comprenant la découpe 26 et l'organe de recouvrement 25 de la découpe 26.

On met alors en position l'organe de recouvrement 25 dans la découpe 26. Le maintien de l'organe de recouvrement 25 dans la découpe 26 est réalisé par l'organe de positionnement 32, par exemple une goupille, qui vient se loger dans l'orifice de positionnement 30 du corps 24 de la deuxième bague 12 et dans un logement de positionnement prévu sur l'organe de recouvrement 25.

Une fois l'organe de recouvrement 25 maintenu en position, il est possible d'usiner les deuxième et troisième chemin de roulement 17, 18 de la deuxième bague 12. On réalise ainsi des deuxième et troisième chemins de roulement 17, 18 précis et continus.

Après l'usinage des deuxième et troisième chemins de roulement 17, 18, une opération de trempe de la deuxième bague 12 composée du corps 24 de la deuxième bague 12 et de l'organe de recouvrement 25 est réalisée.

La trempe est suivie par exemple par une étape de rectification des deuxième et troisième chemins de roulement 10.

On vient ensuite retirer l'organe de recouvrement 25 de la découpe 26 prévue sur le corps 24 de la deuxième bague 12.

La deuxième bague 12 est ainsi terminée, et les différents composants du roulement 10 peuvent alors être assemblés entre eux pour former le roulement 10.

Dans un premier temps, la première bague 11, le corps 24 de la deuxième bague 12 et la troisième bague 13 sont mis en place les uns par rapport aux autres de sorte à former les premier et deuxième espaces annulaires 14, 15.

Dans un deuxième temps, on vient remplir les première et deuxième rangées de corps roulants 20, 22 en insérant dans la découpe 26 les corps roulants 21, 23, dans une direction ou une autre, par exemple l'un après l'autre et en les plaçant dans le premier ou le deuxième espace annulaire 14, 15.

Dans un troisième temps, une fois que l'ensemble des corps roulants 21, 23 des première et deuxième rangées de corps roulants 20, 22 est en position dans les premier et deuxième espaces annulaires 14, 15, l'organe de recouvrement 25 est mis en place dans la découpe 26 puis fixé, par l'organe de fixation 33, au corps 24 de la deuxième bague 12 pour former la deuxième bague 12.

Le roulement 10 ainsi formé peut être pré-chargé pour forcer un positionnement correct des corps roulants 21, 23 sur leurs chemins de roulement 16, 17, 18, 19.

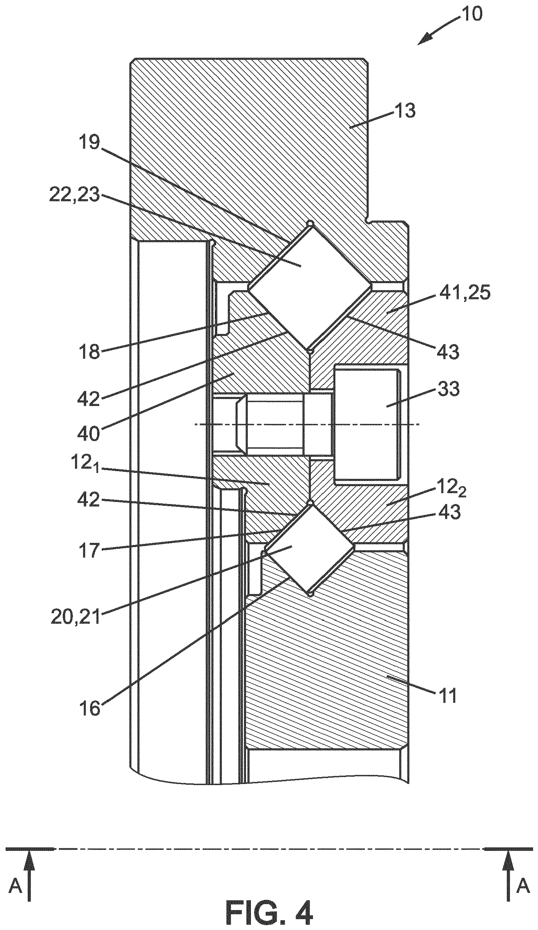

**Dans un exemple comparatif de réalisation non constitutif en soi de l'invention,** représenté sur les figures 3 et 4, la première partie de bague 12₁ de la deuxième bague 12 est une première demi-bague 40, et la deuxième partie de bague 12₂ de la deuxième bague est une deuxième demi-bague 41.

La première demi bague 40 est un anneau continu et plein. La deuxième demi bague 41 est un anneau continu et plein. La première demi bague 40 a une épaisseur radiale qui est égale à l'épaisseur radiale de la deuxième demi bague 41. Par exemple, la première et la deuxième demi bague 40, 41 peuvent avoir des dimensions sensiblement égales. La première et la deuxième demi bague 40, 41 coopèrent ensemble pour former la deuxième bague 12.

La première demi bague 40 et la deuxième demi bague 41 coopèrent ensemble pour former le deuxième et le troisième chemin de roulement 17, 18. Par exemple la première demi bague 40 a une première surface latérale 42 qui s'étend en biseau, la deuxième demi bague 41 a une deuxième surface latérale 43 qui s'étend symétriquement également en biseau, et les première et deuxième surfaces latérales 42, 43 en biseau coopèrent ensemble pour former le deuxième chemin de roulement 17, par exemple sous la forme d'une rainure en V. Par exemple, chacune des demi bagues 40, 41 comprend une branche de la rainure en V, et leur réunion forme le deuxième chemin de roulement 17.

De façon similaire, la coopération des deux demi bagues 40, 41 réalise par exemple une rainure, notamment en forme de V lorsqu'elle est vue d'une section transversale, qui forme le troisième chemin de roulement 18.

Ainsi, la deuxième demi bague 41, qui forme la première partie de bague 12_{1,} est adapté pour coopérer avec la première demi bague 40, qui forme la deuxième partie de bague 12₂.

La première partie de bague 12₁ et la deuxième partie de bague 12₂ sont mobiles l'une par rapport à l'autre entre une configuration de remplissage, dans laquelle le premier espace annulaire 14 et le deuxième espace annulaire 15 sont accessibles, des corps roulants des première et deuxième rangées de corps roulants 20, 22 pouvant être introduits et/ou ôtés des premier et deuxième espaces annulaires, et une configuration assemblée où les première et deuxième parties de bague 12_{1,} 12₂ de la deuxième bague 12 forment ensemble un deuxième et un troisième chemin de roulement 17, 18 continus, une partie de chacun des deuxième et troisième chemins de roulement 17, 18 étant prévue sur chacune des première et deuxième parties de bague12_{1,} 12₂. En l'espèce, un demi deuxième chemin de roulement et un demi troisième chemin de roulement est prévu sur chacune des première partie de bague 12₁ et deuxième partie de bague 12₂. En configuration de remplissage, une portion des deuxième et troisième chemins de roulement 17, 18 (celle prévue sur la première partie de bague 12₁)est accessible. Il est alors possible d'insérer les corps roulants 21, 23 des première et deuxième rangées de corps roulants 20, 22 dans les premier et deuxième espaces annulaires 14, 15. Pour maintenir les corps roulants dans leur premier et deuxième espaces annulaires 14, 15, on vient compléter les deuxième et troisième chemins de roulement 17, 18 en rapportant la deuxième partie de bague 12₂ sur la première partie de bague 12₁.

Par exemple, la première demi bague 40 comporte un orifice de fixation 31 pour la fixation de la deuxième demi bague 41. L'orifice de fixation 31 peut être taraudé pour coopérer avec la tige filetée d'une vis de fixation prévue pour fixer la deuxième demi bague 41 sur la première demi bague 40.

La réalisation d'un roulement 10 selon le deuxième mode de réalisation est semblable à celle mise en oeuvre pour le roulement 10 selon le premier mode de réalisation.

De même, l'assemblage du roulement 10 est réalisé de façon similaire.

En l'occurrence, la réalisation et l'assemblage se font notamment selon les étapes suivantes.

On réalise une première bague 11 définissant un premier chemin de roulement 16 continu et une troisième bague 13 définissant un quatrième chemin de roulement 18 continu. On ébauche une deuxième bague 12 comprenant une première partie de bague 12₁ et une deuxième partie de bague 12₂.

Par la suite, on assemble la première partie de bague 12₁ et la deuxième partie de bague 12₂ de sorte à les placer en configuration assemblée. On maintient en position la deuxième partie de bague 12₂ sur la première partie de bague 12₁ par un organe de positionnement 32.

Ensuite, on usine un deuxième chemin de roulement 17 continu sur la première partie de bague 12₁ et la deuxième partie de bague 12₂ de la deuxième bague 12, une partie du deuxième chemin de roulement étant prévue sur chacune des première et deuxième parties de bague 12₁, 12₂. On usine un troisième chemin de roulement 18 continu sur la première partie de bague 12₁ et la deuxième partie de bague 12₂ de la deuxième bague, une partie du troisième chemin de roulement 18 étant prévue sur chacune des première et deuxième parties de bague 12₁, 12_{2.} Par exemple, chaque partie de bague comporte un demi deuxième chemin de roulement et un demi troisième chemin de roulement.

On trempe la deuxième bague 12 formée par les première et deuxième parties de bague 12₁, 12₂ maintenues en position l'une par rapport à l'autre, puis on rectifie le deuxième et le troisième chemin de roulement 17, 18 de la deuxième bague 12 formée par les première et deuxième parties de bague 12₁, 12₂.

Pour assembler le roulement 10, on positionne les première partie de bague 12₁ et deuxième partie de bague 12₂ de la deuxième bague en configuration de remplissage en désassemblant la deuxième partie de bague 12₂ de la première partie de bague 12₁, par exemple en bougeant la deuxième partie de bague 12₂ à une distance non nulle de la première partie de bague 12_{1.}

On assemble la première bague 11 et la première partie de bague 12₁, lesdites première et deuxième bagues 11, 12 comportant chacune un axe central, les axes centraux des première et deuxième bagues étant parallèles entre eux, lesdites première bague et première partie de bague 12₁ étant espacées radialement par un premier espace annulaire 14, le premier espace annulaire étant en partie défini par le deuxième chemin de roulement 17. Le premier espace annulaire étant alors accessible, la deuxième partie de bague de la deuxième bague n'étant pas assemblée sur la première partie de bague.

On assemble ensuite la troisième bague 13 et la première partie de bague 12₁, la troisième bague comportant un axe central, les axes centraux des troisième et deuxième bagues 12, 13 étant parallèles entre eux, lesdites première partie de bague 12₁ et troisième bagues 13 étant espacées radialement par un deuxième espace annulaire 15, le deuxième espace annulaire étant en partie défini par le troisième chemin de roulement. Le deuxième espace annulaire étant alors accessible, la deuxième partie de bague de la deuxième bague n'étant pas assemblée sur la première partie de bague.

Ensuite, on remplit à partir de la configuration de remplissage de la deuxième bague 12, le premier espace annulaire 14 avec une première rangée de corps roulants 20 pour coupler en rotation ladite première bague 11 et ladite deuxième bague 12, et le deuxième espace annulaire 15 avec une deuxième rangée de corps roulants 22 pour coupler en rotation ladite deuxième bague 12 et ladite troisième bague 13.

Enfin, on replace la deuxième partie de bague 12₂ sur la première partie de bague 12_{1,} on fixe la deuxième partie de bague 12₂ par un organe de fixation 33 de sorte à ce que les première et deuxième parties de bague 12₁, 12₂ soit dans une configuration assemblée où les première et deuxième parties de la deuxième bague 12₁, 12₂ forment ensemble un deuxième et un troisième chemin de roulement 17, 18 continus.

Le roulement 10, objet de la présente invention a jusqu'ici été décrit avec trois bagues 11, 12, 13 et deux rangées de corps roulants 20, 22. Toutefois, dans des variantes de réalisation, le roulement 10 peut avoir plus de deux rangées de billes et plus de trois bagues.

Par exemple, tel qu'illustré sur la figure 6 qui représente un deuxième mode de réalisation du roulement 10, le roulement 10 comporte en outre une quatrième bague 44. Le roulement 10 comporte ainsi une bague intérieure, une bague extérieure et deux bagues intermédiaires.

La première bague 11, qui forme la bague intérieure et la deuxième bague 12 sont espacées radialement par le premier espace annulaire 14. Le premier espace annulaire 14 reçoit la première rangée de corps roulants 20.

La deuxième bague 12 et la troisième bague 13 sont espacées radialement par le deuxième espace annulaire 15. Le deuxième espace annulaire 15 reçoit la deuxième rangée de corps roulants 22.

La troisième bague 13 et la quatrième bague 44, qui forme la bague extérieure sont espacées radialement par un troisième espace annulaire 45. Le troisième espace annulaire 45 reçoit une troisième rangée de corps roulants 46.

Les corps roulants 47 de la troisième rangée de corps roulants 46 peuvent être similaires ou semblables aux corps roulants 21, 23 de la première et/ou de la deuxième rangée de corps roulants 20,22.

Les corps roulants 47 de la troisième rangée de corps roulants 46 peuvent être des rouleaux, par exemple cylindriques. Ils peuvent avoir des dimensions générales supérieures aux rouleaux de la deuxième rangée de corps roulants 22.

Les deuxième et troisième bagues 12, 13 du roulement 10 représenté sur la figure 6 forment respectivement une première et deuxième bague intermédiaire.

La première bague 11 (ou bague intérieure) représentée sur la figure 6 est similaire à la première bague 11 représentée sur les figures 1, 2, 3 et 4.

La quatrième bague 44 (ou bague extérieure) représentée sur la figure 6 est similaire à la troisième bague 13 représentée sur les figures 1, 2, 3 et 4.

La première bague intermédiaire et/ou la deuxième bague intermédiaire comprend (comprennent) une première partie de bague et une deuxième partie de bague.

La première bague intermédiaire peut être similaire à la deuxième bague 12 décrite en références aux figures 1, 2 selon le premier mode de réalisation.

De façon similaire, la deuxième bague intermédiaire peut être similaire à la deuxième bague 12 décrite en références aux figures 1, 2 selon le premier mode de réalisation.

Par exemple, la première bague intermédiaire comprend une première partie de bague avec un corps de bague pourvu d'une découpe, réalisée dans une portion angulaire ou radiale du corps de bague, et la deuxième partie de bague forme un organe de recouvrement 25 de ladite découpe 26. Ainsi la première bague intermédiaire est conforme à la deuxième bague décrite en référence au premier mode de réalisation. La deuxième bague intermédiaire comporte une première et une deuxième partie de bague qui forment respectivement une première et une deuxième demi-bague. Ainsi la deuxième bague intermédiaire est conforme à la deuxième bague décrite en référence dans l'exemple comparatif de réalisation.

Dans une variante de réalisation, la deuxième bague intermédiaire comprend une première partie de bague avec un corps de bague pourvu d'une découpe, réalisée dans une portion angulaire ou radiale du corps de bague, et la deuxième partie de bague forme un organe de recouvrement de ladite découpe 26. Ainsi la deuxième bague intermédiaire est conforme à la deuxième bague décrite en référence au premier mode de réalisation. La première bague intermédiaire comporte une première et une deuxième partie de bague qui forment respectivement une première et une deuxième demi-bague. Ainsi la première bague intermédiaire est conforme à la deuxième bague décrite en référence à l'exemple comparatif de réalisation.

On peut également prévoir que les première et deuxième bagues intermédiaires comprennent toutes les deux respectivement une première partie de bague avec un corps de bague pourvu d'une découpe, réalisée dans une portion angulaire ou radiale du corps de bague, et la deuxième partie de bague forme un organe de recouvrement de ladite découpe 26.

Selon une variante de réalisation, comme mentionné plus haut, les bagues du roulement 10 peuvent ne pas être coaxiales. Par exemple, tel que représenté également sur la figure 6, la deuxième bague 12 (ou première bague intermédiaire) comporte un premier centre C₁, qui est constitué par le point situé à égale distance de l'ensemble des points d'une surface dite «interne» de la bague et un deuxième centre C₂, qui est constitué par le point situé à égale distance de l'ensemble des points d'une surface dite «externe» de la bague. Les premier et deuxième centres C₁ et C₂ de la deuxième bague 12 ne sont pas confondus. Toutefois, tel que représenté, le deuxième centre de la première bague 11 est confondu avec le premier centre de la deuxième bague. En outre, le deuxième centre de la deuxième bague 12 est confondu avec le premier centre de la troisième bague 13. Aussi, les première et deuxième bagues 11, 12 vont être mobiles en rotation l'une par rapport à l'autre autour de l'axe parallèle à l'axe A-A passant par le premier centre C₁ de la deuxième bague 12. De façon similaire, les corps roulants de la deuxième rangée de corps roulants 22 vont coupler en rotation les deuxième et troisième bagues 12, 13 autour de l'axe parallèle à l'axe A-A passant par le deuxième centre C₂ de la deuxième bague 12.

Le roulement 10 représenté sur les figures 1, 2 et 6 peut être mis en oeuvre par exemple dans un réducteur.

En outre, le roulement 10 peut comprendre plus de trois rangées de corps roulants et plus de quatre bagues. Par exemple, le roulement 10 comprend une bague intérieure, une bague extérieure et une pluralité de bagues intermédiaires, toutes ou certaines des bagues intermédiaires, par exemple une bague intermédiaire sur deux comprenant une première et une deuxième partie de bague, mobiles l'une par rapport à l'autre entre une configuration de remplissage, dans laquelle ses espaces annulaires adjacents sont accessibles, des corps roulants pouvant être introduits et/ou ôtés de ses espaces annulaires de part et d'autre de la bague, et une configuration assemblée où les première et deuxième parties de bague forment ensemble deux chemins de roulement continus, une partie de chacun des chemins de roulement étant prévue sur chacune des première et deuxième parties de bague.

## Revendications

1. Roulement (10) comportant :
- une première bague (11), la première bague (11) définissant un premier chemin de roulement (16) continu,
- une deuxième bague (12), lesdites première et deuxième bagues (11, 12) comportant chacune un axe central, les axes centraux des première et deuxième bagues étant parallèles entre eux, lesdites première et deuxième bagues (11, 12) étant espacées radialement par un premier espace annulaire (14), et ladite deuxième bague (12) comprenant une première partie de bague (12₁) et une deuxième partie de bague (12₂),
- une troisième bague (13), la troisième bague définissant un quatrième chemin de roulement (19) continu, la troisième bague comportant un axe central, les axes centraux des troisième et deuxième bagues étant parallèles entre eux, lesdites deuxième et troisième bagues (12, 13) étant espacées radialement par un deuxième espace annulaire (15),
- une première rangée de corps roulants (20) agencée dans le premier espace annulaire (14) et couplant en rotation ladite première bague (11) et ladite deuxième bague (12), et
- une deuxième rangée de corps roulants (22) agencée dans le deuxième espace annulaire (15) et couplant en rotation ladite deuxième bague (12) et ladite troisième bague (13), roulement (10) dans lequel les première et deuxième parties de bague (12₁, 12₂) sont mobiles l'une par rapport à l'autre entre une configuration de remplissage, dans laquelle le premier espace annulaire (14) et le deuxième espace annulaire (15) sont accessibles, des corps roulants des première et deuxième rangées de corps roulants (20, 22) pouvant alors être introduits et/ou ôtés des premier et deuxième espaces annulaires, et une configuration assemblée où les première et deuxième parties de bague (12₁, 12₂) de la deuxième bague (12) forment ensemble un deuxième et un troisième chemin de roulement (17, 18) continus, une partie de chacun des deuxième et troisième chemins de roulement (17, 18) étant prévue sur chacune des première et deuxième parties de bague (12₁, 12₂) de la deuxième bague, lesdits premier et deuxième chemins de roulement (16, 17) coopérant avec chacun des corps roulants de la première rangée de corps roulants (20), et lesdits troisième et quatrième chemins de roulement (18, 19) coopérant avec chacun des corps roulants de la deuxième rangée de corps roulants (22),
**caractérisé en ce que**
la première partie de bague (12₁) comporte une découpe (26), et la deuxième partie de bague (12₂) forme un organe de recouvrement (25) de ladite découpe (26), ladite découpe (26) débouchant dans le premier espace annulaire (14) et dans le deuxième espace annulaire (15) de sorte à permettre le remplissage des corps roulants de la première et deuxième rangée de corps roulants (20, 22) à travers ladite découpe (26).

2. Roulement (10) selon la revendication 1, dans lequel la première rangée de corps roulants (20) est une rangée de rouleaux coopérant chacun avec les premier et deuxième chemins de roulement (16, 17) ménagés sur les première et deuxième bagues (11, 12).

3. Roulement (10) selon la revendication 1 ou 2, dans lequel la deuxième rangée de corps roulants (22) est une rangée de rouleaux coopérant chacun avec les troisième et quatrième chemins de roulement (18, 19) ménagés sur les deuxième et troisième bagues (12, 13).

4. Roulement (10) selon la revendication 2 ou 3, dans lequel les rouleaux de la rangée de corps roulants (20, 22) sont cylindriques et chaque rouleau est orienté avec un angle non nul par rapport aux rouleaux qui lui sont directement adjacents.

5. Roulement (10) selon la revendication 4, dans lequel chaque rouleau est orienté à angle droit par rapport aux rouleaux qui lui sont directement adjacents.

6. Roulement (10) selon l'une quelconque des revendications 1 à 5, dans lequel les corps roulants sont adjacents les uns par rapport aux autres.

7. Roulement (10) selon l'une quelconque des revendications 1 à 6, dans lequel, dans la configuration assemblée, un organe de positionnement (32) coopère avec la première partie de bague (12₁) et la deuxième partie de bague (12₂) pour positionner la deuxième partie de bague (12₂) par rapport à la première partie de bague (12₁).

8. Roulement (10) selon l'une quelconque des revendications 1 à 7, dans lequel, dans la configuration assemblée, un organe de fixation (33) fixe la deuxième partie de bague (12₂) sur la première partie de la deuxième bague(12₁).

9. Roulement (10) selon l'une des revendications 1 à 8, dans lequel la deuxième bague (12) présente une épaisseur radiale dans une direction radiale, et dans lequel la découpe (26) s'étend sur toute l'épaisseur radiale de la deuxième bague.

10. Roulement (10) selon la revendication 9, dans lequel la découpe (26) s'étend sur un secteur angulaire de la deuxième bague inférieur à 90° autour de l'axe central de la deuxième bague 12, et de préférence inférieur à 45°, et dans lequel l'organe de recouvrement s'étend sur un secteur angulaire de la deuxième bague inférieur à 90°, et de préférence inférieur à 45°.

11. Roulement (10) selon la revendication 9 ou la revendication 10, dans lequel la découpe (26) comporte un fond (27) et deux parois latérales (28) opposées reliées entre elles par ledit fond (27), et l'organe de recouvrement (25) coopère par complémentarité de forme avec les parois latérales (28) et le fond (27) de la découpe (26).

12. Roulement (10) selon l'une quelconque des revendications 1 à 11, dans lequel l'organe de recouvrement (25) a une forme trapézoïdale, et dans lequel l'organe de recouvrement (25) comporte des surfaces externes convexes.

13. Roulement (10) selon l'une quelconque des revendications 1 à 12, dans lequel les première et deuxième bagues (11, 12) et/ou les deuxième et troisième bagues (12, 13) ne sont pas coaxiales.

14. Roulement (10) selon l'une quelconque des revendications 1 à 12, dans lequel les première et deuxième bagues (11, 12) et/ou les deuxième et troisième bagues (12, 13) sont coaxiales.

15. Roulement (10) selon l'une quelconque des revendications 1 à 14, comprenant en outre :
- une quatrième bague (44), lesdites troisième et quatrième bagues (13, 44) étant espacées radialement par un troisième espace annulaire (45), la quatrième bague (44) définissant un sixième chemin de roulement (16) continu
- une troisième rangée de corps roulants agencée dans le troisième espace annulaire et couplant en rotation lesdites troisième et quatrième bagues, et
dans lequel
- la troisième bague comprend une première partie de bague et une deuxième partie de bague (13₁, 13₂), et
- les première et deuxième parties de la troisième bague (13₁, 13₂) sont mobiles l'une par rapport à l'autre entre une configuration de remplissage, dans laquelle le deuxième espace annulaire (15) et le troisième espace annulaire (45) sont accessibles, des corps roulants des première et deuxième rangées de corps roulants (20, 22) pouvant alors être introduits et/ou ôtés des premier et deuxième espaces annulaires, et une configuration assemblée où les première et deuxième parties de bague (13₁, 13₂) de la troisième bague (13) forment ensemble le quatrième et un cinquième chemin de roulement continus, une partie de chacun des quatrième et cinquième chemins de roulement étant prévue sur chacune des première et deuxième parties de bague (13₁, 13₂) de la troisième bague (13), lesdits cinquième et sixième chemins de roulement coopérant avec chacun des corps roulants de la troisième rangée de corps roulants.

## Patentansprüche

1. Wälzlager (10), das Folgendes aufweist:
- einen ersten Ring (11), wobei der erste Ring (11) eine durchgehende erste Laufbahn (16) definiert,
- einen zweiten Ring (12), wobei der erste und der zweite Ring (11, 12) jeweils eine mittlere Achse aufweisen, wobei die mittleren Achsen des ersten und des zweiten Rings zueinander parallel sind, wobei der erste und der zweite Ring (11, 12) über einen ersten ringförmigen Raum (14) radial beabstandet sind, wobei der zweite Ring (12) einen ersten Ringteil (12₁) und einen zweiten Ringteil (12₂) umfasst,
- einen dritten Ring (13), wobei der dritte Ring eine durchgehende vierte Laufbahn (19) definiert, wobei der dritte Ring eine mittlere Achse aufweist, wobei die mittleren Achsen des dritten und des zweiten Rings zueinander parallel sind, wobei der zweite und der dritte Ring (12, 13) über einen zweiten ringförmigen Raum (15) radial beabstandet sind,
- eine erste Reihe (20) von Wälzkörpern, die im ersten ringförmigen Raum (14) angeordnet ist und den ersten Ring (11) und den zweiten Ring (12) drehkoppelt, und
- eine zweite Reihe (22) von Wälzkörpern, die im zweiten ringförmigen Raum (15) angeordnet ist und den zweiten Ring (12) und den dritten Ring (13) drehkoppelt,
wobei in dem Wälzlager (10) der erste und der zweite Ringteil (12₁, 12₂) bezüglich einander zwischen einer Einfüllkonfiguration, in der der erste ringförmige Raum (14) und der zweite ringförmige Raum (15) zugänglich sind, wobei Wälzkörper der ersten und der zweiten Reihe (20, 22) von Wälzkörpern somit in den ersten und den zweiten ringförmigen Raum eingeführt und/oder daraus entnommen werden können, und einer montierten Konfiguration, in der der erste und der zweite Ringteil (12₁, 12₂) des zweiten Rings (12) zusammen eine zweite und eine dritte durchgehende Laufbahn (17, 18) bilden, beweglich sind, wobei jeweils ein Teil der zweiten und der dritten Laufbahn (17, 18) an jeweils dem ersten und dem zweiten Ringteil (12₁, 12₂) des zweiten Rings vorgesehen ist, wobei die erste und die zweite Laufbahn (16, 17) mit jedem der Wälzkörper der ersten Reihe (20) von Wälzkörpern zusammenwirken, und die dritte und die vierte Laufbahn (18, 19) mit jedem der Wälzkörper der zweiten Reihe (22) von Wälzkörpern zusammenwirken,
**dadurch gekennzeichnet, dass**
der erste Ringteil (121) eine Aussparung (26) aufweist und der zweite Ringteil (12₂) ein Glied (25) zum Abdecken der Aussparung (26) bildet, wobei die Aussparung (26) im ersten ringförmigen Raum (14) und im zweiten ringförmigen Raum (15) mündet, um das Einfüllen der Wälzkörper der ersten und der zweiten Reihe (20, 22) von Wälzkörpern über diese Aussparung (26) zu gestatten.

2. Wälzlager (10) nach Anspruch 1, wobei die erste Reihe (20) von Wälzkörpern eine Reihe von Rollen ist, die jeweils mit der ersten und der zweiten Laufbahn (16, 17), die am ersten und am zweiten Ring (11, 12) vorgesehen sind, zusammenwirken.

3. Wälzlager (10) nach Anspruch 1 oder 2, wobei die zweite Reihe (22) von Wälzkörpern eine Reihe von Rollen ist, die jeweils mit der dritten und der vierten Laufbahn (18, 19), die am zweiten und am dritten Ring (12, 13) vorgesehen sind, zusammenwirken.

4. Wälzlager (10) nach Anspruch 2 oder 3, wobei die Rollen der Reihe (20, 22) von Wälzkörpern zylindrisch sind und jede Rolle in einem Winkel ungleich null bezüglich der Rollen ausgerichtet ist, die ihr direkt benachbart sind.

5. Wälzlager (10) nach Anspruch 4, wobei jede Rolle in einem rechten Winkel bezüglich der Rollen ausgerichtet ist, die ihr direkt benachbart sind.

6. Wälzlager (10) nach einem der Ansprüche 1 bis 5, wobei die Wälzkörper einander benachbart sind.

7. Wälzlager (10) nach einem der Ansprüche 1 bis 6, wobei ein Positionierungsglied (32) in der montierten Konfiguration mit dem ersten Ringteil (12₁) und dem zweiten Ringteil (12₂) zusammenwirkt, um den zweiten Ringteil (12₂) bezüglich des ersten Ringteils (12₁) zu positionieren.

8. Wälzlager (10) nach einem der Ansprüche 1 bis 7, wobei ein Befestigungsglied (33) in der montierten Konfiguration den zweiten Ringteil (12₂) am ersten Teil (12₁) des zweiten Rings befestigt.

9. Wälzlager (10) nach einem der Ansprüche 1 bis 8, wobei der zweite Ring (12) eine radiale Dicke in einer radialen Richtung aufweist und wobei sich die Aussparung (26) durch die gesamte radiale Dicke des zweiten Rings erstreckt.

10. Wälzlager (10) nach Anspruch 9, wobei sich die Aussparung (26) über einen Winkelsektor des zweiten Rings kleiner 90° und vorzugsweise kleiner 45° um die mittlere Achse des zweiten Rings (12) erstreckt und wobei sich das Abdeckglied über einen Winkelsektor des zweiten Rings kleiner 90° und vorzugsweise kleiner 45° erstreckt.

11. Wälzlager (10) nach Anspruch 9 oder Anspruch 10, wobei die Aussparung (26) einen Boden (27) und zwei gegenüberliegende seitliche Wände (28) aufweist, die durch den Boden (27) miteinander verbunden sind, und das Abdeckglied (25) formschlüssig mit den seitlichen Wänden (28) und dem Boden (27) der Aussparung (26) zusammenwirkt.

12. Wälzlager (10) nach einem der Ansprüche 1 bis 11, wobei das Abdeckglied (25) trapezförmig ist und wobei das Abdeckglied (25) konvexe Außenflächen aufweist.

13. Wälzlager (10) nach einem der Ansprüche 1 bis 12, wobei der erste und der zweite Ring (11, 12) und/oder der zweite und der dritte Ring (12, 13) nicht koaxial sind.

14. Wälzlager (10) nach einem der Ansprüche 1 bis 12, wobei der erste und der zweite Ring (11, 12) und/oder der zweite und der dritte Ring (12, 13) koaxial sind.

15. Wälzlager (10) nach einem der Ansprüche 1 bis 14, ferner umfassend:
- einen vierten Ring (44), wobei der dritte und der vierte Ring (13, 44) über einen dritten ringförmigen Raum (45) radial beabstandet sind, wobei der vierte Ring (44) eine durchgehende sechste Laufbahn (16) definiert,
- eine dritte Reihe von Wälzkörpern, die im dritten ringförmigen Raum angeordnet ist und den dritten und den vierten Ring drehkoppelt, und
- wobei
- der dritte Ring einen ersten Ringteil und einen zweiten Ringteil (13₁, 13₂) umfasst und
- der erste und der zweite Teil (13₁, 13₂) des dritten Rings bezüglich einander zwischen einer Einfüllkonfiguration, in der der zweite ringförmige Raum (15) und der dritte ringförmige Raum (45) zugänglich sind, wobei Wälzkörper der ersten und der zweiten Reihe (20, 22) von Wälzkörpern somit in den ersten und den zweiten ringförmigen Raum eingeführt und/oder daraus entnommen werden können, und einer montierten Konfiguration, in der der erste und der zweite Teil (13₁, 13₂) des dritten Rings (13) zusammen die vierte und eine fünfte durchgehende Laufbahn bilden, beweglich sind, wobei jeweils ein Teil der vierten und der fünften Laufbahn an jeweils dem ersten und dem zweiten Ringteil (13₁, 13₂) des dritten Rings (13) vorgesehen ist, wobei die fünfte und die sechste Laufbahn mit jedem der Wälzkörper der dritten Reihe von Wälzkörpern zusammenwirken.

## Claims

1. Rolling bearing (10) comprising:
- a first ring (11), the first ring (11) defining a first continuous raceway (16),
- a second ring (12), said first and second rings (11, 12) each having a central axis, the central axes of the first and second rings being parallel with one another, said first and second rings (11, 12) being radially spaced apart by a first annular space (14), and said second ring (12) comprising a first ring part (12₁) and a second ring part (12₂),
- a third ring (13), the third ring defining a fourth continuous raceway (19), the third ring having a central axis, the central axes of the third and second rings being parallel with one another, said second and third rings (12, 13) being radially spaced apart by a second annular space (15),
- a first row of rolling bodies (20) disposed in the first annular space (14) and coupling said first ring (11) and said second ring (12) in rotation, and
- a second row of rolling bodies (22) disposed in the second annular space (15) and coupling said second ring (12) and said third ring (13) in rotation,
roller bearing (10) in which the first and second ring parts (12₁, 12₂) are displaceable relative to one another between a filling configuration, in which the first annular space (14) and the second annular space (15) are accessible so that the rolling bodies of the first and second rows of rolling bodies (20, 22) can be introduced into and/or removed from the first and second annular spaces, and an assembly configuration in which the first and second ring parts (12₁, 12₂) of the second ring (12) together form a second and a third continuous raceway (17, 18), a part of each of the second and third raceways (17, 18) being disposed on each of the first and second ring parts (12₁, 12₂) of the second ring, said first and second raceways (16, 17) co-operating with each of the rolling bodies of the first row of rolling bodies (20), and said third and fourth raceways (18, 19) co-operating with each of the rolling bodies of the second row of rolling bodies (22),
**characterised in that**
the first ring part (12₁) comprises a cut-out (26), and the second ring part (12₂) forms a cover element (25) of said cut-out (26), said cut-out (26) opening into the first annular space (14) and into the second annular space (15) to enable the rolling bodies of the first and second row of rolling bodies (20, 22) to be inserted via said cut-out (26).

2. Rolling bearing (10) as claimed in claim 1, wherein the first row of rolling bodies (20) is a row of rollers, each co-operating with the first and second raceways (16, 17) provided on the first and second rings (11, 12).

3. Rolling bearing (10) as claimed in claim 1 or 2, wherein the second row of rolling bodies (22) is a row of rollers, each co-operating with the third and fourth raceways (18, 19) provided on the second and third rings (12, 13).

4. Rolling bearing (10) as claimed in claim 2 or 3, wherein the rollers of the row of rolling bodies (20, 22) are cylindrical and each roller is oriented at an angle that is not zero relative to the rollers disposed directly adjacent to it.

5. Rolling bearing (10) as claimed in claim 4, wherein each roller is oriented at a right angle to the rollers disposed directly adjacent to it.

6. Rolling bearing (10) as claimed in any one of claims 1 to 5, wherein the rolling bodies are disposed adjacent to one another.

7. Rolling bearing (10) as claimed in any one of claims 1 to 6, wherein in the assembly configuration, a positioning element (32) co-operates with the first ring part (12₁) and the second ring part (12₂) in order to position the second ring part (12₂) relative to the first ring part (12₁).

8. Rolling bearing (10) as claimed in any one of claims 1 to 7, wherein in the assembly configuration, a fixing element (33) secures the second ring part (12₂) to the first part (12₁) of the second ring.

9. Rolling bearing (10) as claimed in one of claims 1 to 8, wherein the second ring (12) has a radial thickness in a radial direction, and wherein the cut-out (26) extends across the entire radial thickness of the second ring.

10. Rolling bearing (10) as claimed in claim 9, wherein the cut-out (26) extends around the central axis of the second ring 12 across an angular sector of the second ring of less than 90°, and preferably less than 45°, and wherein the cover element extends across an angular sector of the second ring of less than 90°, and preferably less than 45°.

11. Rolling bearing (10) as claimed in claim 9 or claim 10, wherein the cut-out (26) comprises a base (27) and two opposing side walls (28) connected to one another by said base (27), and the cover element (25) co-operates with the side walls (28) and the base (27) of the cut-out (26) being of a complementary shape.

12. Rolling bearing (10) as claimed in any one of claims 1 to 11, wherein the cover element (25) is of a trapezoidal shape and wherein the cover element (25) comprises convex external surfaces.

13. Rolling bearing (10) as claimed in any one of claims 1 to 12, wherein the first and second rings (11, 12) and/or the second and third rings (12, 13) are not coaxial.

14. Rolling bearing (10) as claimed in any one of claims 1 to 12, wherein the first and second rings (11, 12) and/or the second and third rings (12, 13) are coaxial.

15. Rolling bearing (10) as claimed in any one of claims 1 to 14, further comprising:
- a fourth ring (44), said third and fourth rings (13, 44) being radially spaced apart by a third annular space (45), the fourth ring (44) defining a sixth continuous raceway (16),
- a third row of rolling bodies disposed in the third annular space and coupling said third and fourth rings in rotation, and
wherein
- the third ring comprises a first ring part and a second ring part (13₁, 13₂), and
- the first and second parts (13₁, 13₂) of the third ring are displaceable relative to one another between a filling configuration, in which the second annular space (15) and the third annular space (45) are accessible so that the rolling bodies of the first and second rows of rolling bodies (20, 22) can be introduced into and/or removed from the first and second annular spaces, and an assembly configuration in which the first and second ring parts (13₁, 13₂) of the third ring (13) together form the fourth and a fifth continuous raceway, a part of each of the fourth and fifth raceways being disposed on each of the first and second ring parts (13₁, 13₂) of the third ring (13), said fifth and sixth raceways co-operating with each of the rolling bodies of the third row of rolling bodies.
